# EUROPÄISCHE PATENTSCHRIFT

(11) **EP 0 587 591 B1**
(45) Veröffentlichungstag und Bekanntmachung des Hinweises auf die Patenterteilung: **15.02.1995**
(21) Anmeldenummer: 92909736.8
(22) Anmeldetag: 13.05.1992
(51) Int. Cl.: B05D 5/02, B05D 1/36

(54) **VERFAHREN ZUR HERSTELLUNG MATTER LACKOBERFLÄCHEN**
METHOD OF PRODUCING MATT VARNISHED SURFACES
PROCEDE D'OBTENTION DE SURFACES VERNIES MATES

(30) Priorität: 07.06.1991 DE 4118731
(43) Veröffentlichungstag der Anmeldung: 23.03.1994
(73) Patentinhaber: BASF Lacke + Farben AG, 48165 Münster-Hiltrup (DE)
(72) Erfinder: SCHUNCK, Stephan, Dr., D-86152 Augsburg (DE)
(86) Internationale Anmeldenummer: EP9201051
(87) Internationale Veröffentlichungsnummer: WO9221450

(56) Entgegenhaltungen:
- EP-A- 0 030 285
- EP-A- 0 061 121
- EP-A- 0 296 395
- DE-A- 2 336 525

## Beschreibung

Gegenstand der vorliegenden Erfindung ist ein Verfahren zur Herstellung matter Lackoberflächen, bei dem zunächst eine erste Lackschicht mit einer ersten Schichtdicke aufgebracht wird und anschließend auf die erste Lackschicht mindestens eine zweite Lackschicht aufgebracht wird, wobei zumindest die zuletzt aufgebrachte Lackschicht mit Mattierungsmitteln versehen ist und eine Trockenfilmschichtdicke aufweist, die kleiner als die durchschnittliche Teilchengröße des Mattierungsmittels ist.

Zum Aufbringen von Lack auf verschiedene Materialien, insbesondere Möbelfolien oder Spanplatten, werden überwiegend High-Solid-Lacksysteme verwendet, die sich durch eine besondere Umweltfreundlichkeit und hohe Wirtschaftlichkeit der verwendeten Lackiervorrichtungen auszeichnen. Einen Schwerpunkt derartiger Lacke bilden die mittels UV-Strahlung härtbaren Lacksysteme. Es sind aber auch Lacke bekannt, die durch ionisierende Strahlung, insbesondere durch Elektronenstrahlen, gehärtet werden. Diese Methode hat gegenüber der UV-Härtung den Vorteil, daß auch Schichten, die deckend pigmentiert sind, in kurzer Zeit zu harten Überzügen gehärtet werden können. Außerdem ist die Anwesenheit von Photoinitiatoren nicht erforderlich.
Sowohl unter Verwendung der mittels UV-Strahlung als auch der mittels ionosierender Strahlung härtbaren Lacke lassen sich problemlos hochglänzende bis seidenglänzende Überzüge herstellen, die einen Glanzgrad zwischen 100 und 40 Einheiten nach DIN 67530 bei einem Meßwinkel von 60 Grad aufweisen. Dagegen bereitet die Herstellung von matten Oberflächen, die für viele Anwendungszwecke gefordert werden, außergewöhnliche Schwierigkeiten. Diese Probleme lassen sich auch mit den üblichen Methoden der Mattierung von Lacken durch den Einsatz von hochdispersen Siliciumdioxiden oder von Polyolefinpulver, Metallsalzen oder mineralischen Füllstoffen nicht überwinden.
Dies gilt insbesondere dann, wenn Beschichtungen mit einer sehr großen Kratzfestigkeit hergestellt werden sollen, wie dies beispielsweise für Beschichtungen von Möbelfolien der Fall ist. Um die große Kratzfestigkeit zu gewährleisten, muß der aufgebrachte Lack bekanntlich eine gewisse Mindestschichtdicke aufweisen, um so eine ausreichende mechanische Stabilität der Lackschicht sicherzustellen. Bei der Herstellung von matten Oberflächen besteht daher die Schwierigkeit darin, daß die Mattierungsmittel aufgrund ihrer kleinen Teilchendurchmesser bei zu großer Schichtdicke innerhalb der Lackschicht soweit nach unten absinken, daß sie nicht mehr aus der Oberfläche herausragen können und daher nicht mehr der gewünschte matte Eindruck hervorgerufen wird.
In der DE-C-37 21 071 wird daher ein zweistufiges Verfahren zur Herstellung matter Oberflächen vorgeschlagen, bei dem zunächst eine erste und anschließend mindestens eine zweite Lackschicht aufgebracht werden, wobei zumindest die zuletzt aufgebrachte Lackschicht mit Mattierungsmitteln versehen ist. Gehärtet werden die Lackschichten mittels UV-Strahlung.
Dieses Verfahren weist allerdings den Nachteil auf, daß bei der Beschichtung von imprägnierten oder porösen Substraten, wie z. B. von Dekorpapieren, Filtern, Gips, Beton o. ä., ein erhebliches Risiko besteht, daß ungehärtete Lackbestandteile (Monomere, Bindemittel) in der Beschichtung verbleiben, die zu Emissionsproblemen führen und die eine Verschlechterung der Oberflächenqualität zur Folge haben. Nachteilig ist ferner, daß es erforderlich ist, mehrere Schichten aufzubringen, wenn höhere Gesamtschichtdicken erzielt werden sollen. Probleme treten außerdem auf, wenn pigmentierte Beschichtungen nach diesem Verfahren hergestellt werden sollen. Nachteilig ist schließlich auch, daß zur Härtung den Beschichtungsmitteln Photoinitiatoren zugesetzt werden müssen. Bruchstücke und Folgeprodukte der Initiatoren führen ebenfalls zu Emissionsproblemen.
In der DE-B-29 47 597 ist ebenfalls ein Verfahren zur Herstellung matter Oberflächen beschrieben. Bei diesem Verfahren wird ein Überzugsmittel aufgebracht und dadurch gehärtet, daß man das System der aufeinanderfolgenden kombinierten Einwirkung von ionisierenden Strahlen oder UV-Strahlen und von Wärmestrahlen oder Heißluft unterwirft, bis der gesamte Film oder Überzug gehärtet ist. Nachteilig bei diesem Verfahren ist jedoch, daß die Beschichtung wärmeempfindlicher Substrate nicht oder nur bedingt möglich ist, da zusätzlich unbedingt eine thermische Härtung der Überzugsmittel erforderlich ist, um die gewünschten Eigenschaften der resultierenden Beschichtungen zu erreichen.
Ungünstig ist aber vor allem, daß beim Härten der Überzugsmittel Formaldehyd abgespalten wird, der zu Problemen sowohl bei der Härtung der Überzugsmassen als auch bei der Weiterverarbeitung bzw. dem Gebrauch der beschichteten Substrate führt. Nachteilig ist schließlich noch die geringe Topfzeit dieser Überzugsmassen.

Der vorliegenden Erfindung liegt somit die Aufgabe zugrunde, ein Verfahren zur Herstellung matter Oberflächen zur Verfügung zu stellen, das die Nachteile der bekannten Verfahren nicht aufweist und zu Beschichtungen mit guten technischen Eigenschaften führt. Insbesondere sollte das Verfahren hohe Verarbeitungsgeschwindigkeiten erlauben, für eine Vielzahl von Substraten, insbesondere auch für schwierige Untergründe, wie z.B. poröse und/oder thermisch empfindliche Substrate, geeignet sein. Die resultierenden Beschichtungen sollten eine große Kratzfestigkeit und einen möglichst geringen Gehalt an ungehärteten Lackbestandteilen aufweisen. Ferner sollte das Verfahren auch zur Herstellung pigmentierter Beschichtungen geeignet sein.

Überraschenderweise wird diese Aufgabe durch ein Verfahren zur Herstellung matter Oberflächen gelöst, bei dem zunächst eine erste Lackschicht mit einer ersten Schichtdicke aufgebracht wird und anschließend auf die erste Lackschicht mindestens eine zweite Lackschicht aufgebracht wird, wobei zumindest die zuletzt aufgebrachte Lackschicht mit Mattierungsmitteln versehen ist und eine Trockenfilmschichtdicke aufweist, die kleiner als die durchschnittliche Teilchengröße des Mattierungsmittels ist.

Das Verfahren ist dadurch gekennzeichnet, daß die aufgebrachten Lackschichten durch ionisierende Strahlung gehärtet werden und daß Überzugsmassen aufgebracht werden, die
A) 20 bis 80 Gew.-% mindestens eines ethylenisch ungesättigten polymeren Harzes,
B) 10 bis 60 Gew.-% mindestens einer ethylenisch ungesättigten monomeren und/oder oligomeren Verbindung,
C) ggf. 5 bis 30 Gew.-% mindestens eines Mattierungsmittels,
D) ggf. einen oder mehrere Haftvermittler und
E) ggf. Hilfs- und Zusatzstoffe
enthalten, wobei die Summe der Gewichtsanteile der Komponenten (A) bis (E) jeweils 100 Gew.-% beträgt.

Gegenstand der vorliegenden Erfindung ist ferner ein mit einem mehrschichtigen Überzug mit matter Lackoberfläche beschichteter Gegenstand.

Das erfindungsgemäße Verfahren weist den Vorteil auf, daß es die Herstellung matter, ggf. farbiger Oberflächen mit einer gleichzeitig hohen Kratzfestigkeit ermöglicht. Insbesondere ermöglicht das Verfahren auch die Beschichtung schwieriger Untergründe, insbesondere die Beschichtung von porösen und/oder wärmeempfindlichen Substraten mit einer hohen Geschwindigkeit. Die resultierenden Beschichtungen zeichnen sich ferner durch einen niedrigen Gehalt an ungehärteten Lackbestandteilen (Monomer, Bindemittel) und Formaldehydfreiheit aus. Vorteilhaft ist ferner, daß auch hohe Gesamtschichtdicken (ca. ≳ 150 »m) mit nur 2 bis 3 Lackierschritten erzielt werden können, während bei UV-härtenden Systemen wesentlich mehr Lackierschritte zur Erzielung gleicher Gesamtschichtdicken erforderlich sind. Im folgenden wird nun das erfindungsgemäße Verfahren näher erläutert.
Die Herstellung matter und gleichzeitig kratzfester Oberflächen wird nach dem erfindungsgemäßen Verfahren dadurch erreicht, daß nach einem mehrstufigen Verfahren gearbeitet wird. Zunächst wird eine erste Lackschicht mit einer ersten Schichtdicke aufgetragen. Anschließend wird auf die erste Lackschicht mindestens eine zweite Lackschicht aufgebracht, wobei zumindest die Zuletzt aufgebrachte Lackschicht mit Mattierungsmitteln versehen ist.

Bei der oder den zuerst aufgebrachten Lackschichten spielt es noch keine Rolle, ob die Partikel der Mattierungsmittel vollständig in der Lackschicht versinken oder aus der Oberfläche herausragen. Diese Lackschicht bzw. Lackschichten können daher allein unter dem Gesichtspunkt einer hohen Kratzfestigkeit gewählt werden.
Üblicherweise ist daher die Trockenfilmschichtdicke dieser Lackschichten gleich oder bevorzugt größer als die Trockenfilmschichtdicke der zuletzt aufgebrachten Lackschicht. Bevorzugt beträgt die Trockenfilmschichtdicke der ersten Lackschicht oder - falls insgesamt mehr als zwei Lackschichten aufgebracht werden - der ersten Lackschichten mindestens 3 »m.
Auf die erste Lackschicht bzw. Lackschichten wird nun eine weitere, letzte Lackschicht aufgebracht, deren Schichtdicke so gewählt wird, daß in gewünschter Weise eine matte Oberfläche entsteht. Die Trockenfilmschichtdicke der letzten Schicht muß daher kleiner als die durchschnittliche Teilchengröße des Mattierungsmittels sein. Bevorzugt beträgt die Trockenfilmschichtdicke der letzten Lackschicht mindestens 2 »m. Die Trockenfilmschichtdicke des Gesamtaufbaus, d. h. die Summe der Trockenfilmschichtdicken aller aufgebrachten Lackschichten, liegt bevorzugt zwischen 5 und 20 »m, kann jedoch je nach Anwendungszweck auch erheblich höher liegen (≈ 250 »m oder noch höher). Besonders bevorzugt werden insgesamt nur zwei Lackschichten aufgebracht, um so den Aufwand zur Herstellung der Beschichtung und damit die Kosten möglichst niedrig zu halten.
Bevorzugt wird bei dem Auftrag der einzelnen Schichten nach dem sogenannten "naß-in-naß-Verfahren" gearbeitet. D. h., daß die nächste Lackschicht jeweils aufgebracht wird, ohne die vorherige Lackschicht auszuhärten. Ausgehärtet werden dann alle Lackschichten gemeinsam, wodurch auch eine Vernetzung zwischen den einzelnen Lackschichten erfolgen kann.
Dabei darf jedoch die Gesamtschichtdicke der zu härtenden Schichtdicken nicht zu hoch sein (i. a. ≦ 250 »m), um eine vollständige Durchhärtung zu gewährleisten. Bei höheren Schichtdicken sollte daher mit einer Zwischenhärtung gearbeitet werden.

Das erfindungsgemäße Verfahren kann unter Verwendung der üblichen, bekannten Lackiervorrichtungen erfolgen. Geeignet ist ferner eine Vorrichtung, die analog zu der in der DE-C-37 21 071 beschriebenen Vorrichtung aufgebaut ist, sich allerdings von dieser Vorrichtung dadurch unterscheidet, daß die Aushärtung nicht durch UV-Strahlen, sondern durch ionisierende Strahlung erfolgt.
Die Härtung der Überzugsmassen erfolgt mit Hilfe üblicher Elektronenstrahlanlagen. Es kann dabei mit Spannungen von unter 100 kV (im Vakuum) bis zu 5000 kV gearbeitet werden, jedoch sind Spannungen zwischen 150 und 500 kV üblich und bevorzugt. Die Stromstärken betragen i. a. je nach Anlage 1 bis 200 mA, wobei 1 bis 20 mA je m Breite bevorzugt werden. Je nach Ausführung und Leistung der Elektronenstrahlanlage betragen die Bandgeschwindigkeiten zwischen 5 und 150 m/min.
Das Auftragen der einzelnen Lackschichten erfolgt nach den in der Lackindustrie üblichen Methoden des Spritzens, Streichens, Tauchens, Gießens und Walzens. Das erfindungsgemäße Verfahren wird zur Veredelung von Papieroberflächen und zur Beschichtung von glatten und porösen Substraten, wie Holzwerkstoffe, Holz, Papier, Pappe, Kunststoffe, Glas, mineralische und keramische Werkstoffe und Metalle verwendet.
Für den Einsatz in dem erfindungsgemäßen Verfahren geeignet sind insbesondere Überzugsmassen, die
A) 20 bis 80 Gew.-% mindestens eines ethylenisch ungesättigten polymeren Harzes,
B) 10 bis 60 Gew.-% mindestens einer ethylenisch ungesättigten monomeren und/oder oligomeren Verbindung,
c) ggf. 5 bis 30 Gew.-%, bevorzugt 10 bis 18 Gew.-%, mindestens eines Mattierungsmittels,
D) ggf. einen oder mehrere Haftvermittler und
E) Hilfs- und Zusatzstoffe
enthalten, wobei die Summe der Gewichtsanteile der Komponenten A bis E jeweils 100 Gew.-% beträgt.

Als Komponete A wird üblicherweise eine Mischung aus
a₁) 0 bis 60 Gew.-%, bevorzugt 30 bis 55 Gew.-%, bezogen auf das Gesamtgewicht der Überzugsmasse (nicht bezogen auf das Gewicht der Komponente A, d. h. die Summe der Gewichtsanteile a₁ bis a₄ kann maximal 80 Gew.-%, bezogen auf das Gesamtgewicht der Überzugsmasse, betragen), mindestens eines Polyetheracrylates,
a₂) 0 bis 12 Gew.-%, bevorzugte 3 bis 7 Gew.-%, bezogen auf das Gesamtgewicht der Überzugsmasse, mindestens eines Acrylatcopolymerisates, bevorzugt mit ethylenisch ungesättigten Seitenketten,
a₃) 0 bis 35 Gew.-%, bevorzugt 15 bis 23 Gew.-%, bezogen auf das Gesamtgewicht der Überzugsmasse, mindestens eines Polyesteracrylates und
a₄) 0 bis 15 Gew.-%, bevorzugt 7 bis 15 Gew.-%, bezogen auf das Gesamtgewicht der Überzugsmasse, mindestens eines Epoxyacrylates
eingesetzt.

Die als Komponente a₁ in den strahlenhärtbaren Überzugsmassen eingesetzten Polyetheracrylate sind an sich bekannt. Diese Polyetheracrylate weisen üblicherweise ein Doppelbindungsäquivalentgewicht von 1 bis 7 mol/kg sowie ein zahlenmittleres Molekulargewicht von 400 bis 2000 auf.
Sie können nach den verschiedensten Methoden hergestellt werden, beispielsweise durch Umsetzung von Polyetherdiolen und/oder Polyetherpolyolen mit Acryl- und/oder Methacrylsäure oder durch Veretherung von Hydroxialkylestern der Acryl- bzw. Methacrylsäure. Die Herstellung dieser Polyetheracrylate ist dem Fachmann aber bekannt und braucht daher nicht näher erläutert zu werden. Bezüglich der Herstellung der Polyetheracrylate durch Veresterung von Polyetherdi- bzw. -polyolen mit (Meth)Acrylsäure wird außerdem auf die DE-A-33 16 593 sowie DE-A-38 36 370 verwiesen, in denen die Reaktionsbedingungen sowie geeignete Verbindungen näher beschrieben sind.

Ein Beispiel für geeignete, im Handel erhältliche Polyetheracrylate ist u. a. das unter der Bezeichnung Laromer® 8812 der Firma BASF AG erhältliche Produkt.

Die als Komponente a₂ in den strahlenhärtbaren Überzugsmassen eingesetzten Acrylatcopolymerisate mit ethylenisch ungesättigten Seitenketten sind ebenfalls an sich bekannt. Sie weisen üblicherweise ein Doppelbindungsäquivalentgewicht von 1 bis 7 mol/kg sowie ein zahlenmittleres Molekulargewicht von 400 bis 2500 auf.
Die Acrylatcopolymerisate sind beispielsweise durch ein zweistufiges Verfahren herstellbar, indem zunächst unter Mitverwendung mindestens eines ethylenisch ungesättigten Monomers mit mindestens einer funktionellen Gruppe ein Copolymerisat (I) hergestellt wird, das dann in einer zweiten Stufe mit mindestens einer Verbindung umgesetzt wird, die mindestens eine ethylenisch ungesättigte Doppelbindung sowie eine mit den funktionellen Gruppen des in der ersten Stufe hergestellten Copolymerisats (I) reaktionsfähige Gruppe aufweist.

Das Copolymerisat (I) ist dabei nach den üblichen Methoden der Polymerisation, beispielsweise durch eine radikalische Lösungspolymerisation bei Temperaturen von im allgemeinen 70 bis 200 °C in Gegenwart eines Initiators und bevorzugt in Gegenwart eines Polymerisationsreglers, herstellbar. Für die Herstellung des Copolymerisats (I) geeignet sind Monomere mit einer oder mehreren ethylenisch ungesättigten Doppelbindungen, wobei zumindest ein Teil dieser Monomeren mindestens eine funktionelle Gruppe aufweist.
Als Monomere mit mindestens einer funktionellen Gruppe kommen beispielsweise ethylenisch ungesättigte Carbonsäuren, insbesondere Acrylsäure; epoxidgruppenhaltige ethylenisch ungesättigte Monomere, insbesondere Glycidylester ungesättigter Carbonsäuren und/oder Glycidylether von ungesättigten Verbindungen, wie z. B. Glycidyl(meth)acrylat und hydroxylgruppenhaltige Monomere, wie z. B. Hydroxialkylester der (Meth)Acrylsäure in Betracht. Denkbar sind ferner auch isocyanatgruppenhaltige oder aminogruppenhaltige Monomere.
Als Comonomere für diese Monomere mit mindestens einer funktionellen Gruppe sind prinzipiell alle ethylenisch ungesättigten Verbindungen geeignet, die zu den jeweils gewünschten Eigenschaften führen, wie beispielsweise Alkylester der Acryl- oder Methacrylsäure sowie anderer ethylenisch ungesättigter Carbonsäuren, vinylaromatische Verbindungen u. ä.

Die Copolymeristate (I) werden dann in einer zweiten Stufe mit Verbindungen umgesetzt, die neben mindestens einer ethylenisch ungesättigten Doppelbindung noch eine Gruppe haben, die mit den funktionellen Gruppen des Copolymerisats reaktionsfähig ist. Je nach Art der funktionellen Gruppen des Copolymerisats kommen als derartige Verbindungen wiederum vor allem ethylenisch ungesättigte Carbonsäuren, epoxidgruppenhaltige Monomere und hydroxylgruppenhaltige Monomere zum Einsatz.
Als Komponente a₂ geeignet sind auch verschiedene im Handel erhältliche Produkte, wie beispielsweise Ebecryl® 754 der Firma UCB, Belgien.

Auch die als Komponente a₃ eingesetzten Polyesteracrylate sind an sich bekannt. Sie weisen üblicherweise ein Doppelbindungsäquivalentgewicht von 1 bis 5 mol/kg sowie ein zahlenmittleres Molekulargewicht von 500 bis 2000 auf.
Die Polyesteracrylate können auf unterschiedliche Weise hergestellt werden. Beispielsweise können Acryl- und/oder Methacrylsäure beim Aufbau der Polyester als Bestandteil der Säurekomponente mitverwendet werden. Üblicherweise werden die Polyesteracrylate aber durch Umsetzung von hydroxylgruppenhaltigen Polyestern mit Acryl- und/oder Methacrylsäure hergestellt. Wegen weiterer Einzelheiten bezüglich der Herstellbedingungen sowie der eingesetzten Verbindungen wird hier nur auf die Literatur verwiesen. So sind als Komponente a₃ beispielsweise die in der DE-A-33 16 593 sowie die in der DE-A-38 36 370 beschriebenen Polyesteracrylate geeignet.
Geeignet sind ferner auch verschiedene, im Handel erhältliche Produkte, beispielsweise Laromer® PE46 der Firma BASF AG.

Schließlich sind auch die als Komponente a₄ eingesetzten Epoxiacrylate an sich bekannt. Sie weisen üblicherweise ein Doppelbindungsäquivalentgewicht von 1 bis 4 mol/kg sowie ein zahlenmittleres Molekulargewicht von 400 bis 1500 auf.
Die Epoxiacrylate werden üblicherweise durch Umsetzung einer epoxidgruppenhaltigen Verbindung, wie z. B. der Diglycidylether von Bisphenol-A, Expoxidharze auf Basis Bisphenol-A u. ä., mit Acryl- und/oder Methacrylsäure hergestellt.
Geeignete Epoxiacrylate sind beispielsweise in Richard Holman, UV and EB curing, formulations for printing inks, coatings and paints, Sita Technology 203, Gardian House, Broonhill Road, London, SW18, ISBN 0947798021 beschrieben. Geeignet sind auch die im Handel erhältlichen Produkte, beispielsweise Laromer® EA81 der Firma BASF AG.

Als Komponente B enthalten die Überzugsmassen üblicherweise 10 bis 60 Gew.-% mindestens einer ethylenisch ungesättigten monomeren und/oder oligomeren Verbindung. Zum Einsatz als Komponente B kommen vor allem Ester der (Meth)Acrylsäure, wie z. B. Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Octadecenyl(meth)acrylat sowie die entsprechenden Ester der Malein-, Fumar-, Tetrahydrophthal-, Croton-, Isocroton-, Vinylessig- und Itaconsäure. Bevorzugt eingesetzt werden Monomere mit mehr als 1 Doppelbindung pro Molekül, wie z. B. Ethylenglykoldiacrylat, Diethylenglykoldiacrylat, Propylenglykoldiacrylat, Trimethylenglykoldiacrylat, Neopentylglykoldiacrylat, 1,3-Butylenglykoldiacrylat, 1,4-Butylenglykoldiacrylat, 1,6-Hexamethylenglykoldiacrylat, 1,10-Decamethylenglykoldiacrylat, Trimethylolpropantriacrylat, Pentaerythrittriacrylat, Pentaerythrittetraacrylat sowie die entsprechenden Methacrylate. Ganz besonders bevorzugt eingesetzt werden Tripropylenglykoldiacrylat oder alkylierte, insbesondere ethoxilierte und propoxilierte, Tripropylenglykoldiacrylate.

Wird die Überzugsmasse zur Herstellung der letzten Lackschicht eingesetzt, so enthält sie mindestens ein Mattierungsmittel. Aber auch die zur Herstellung der übrigen Lackschichten eingesetzten Überzugsmassen können, müssen aber nicht, mindestens ein Mattierungsmittel enthalten. Die Einsatzmenge des Mattierungsmittels beträgt üblicherweise 5 bis 30 Gew.-%, bevorzugt 10 bis 18 Gew.-%, jeweils bezogen auf das Gesamtgewicht der Überzugsmasse.

Als Mattierungsmittel geeignet sind alle üblicherweise eingesetzten Mattierungsmittel, beispielsweise Kieselsäure.

Bevorzugt werden Mattierungsmittel mit einer durchschnittlichen Teilchengröße ≧ 1 »m, bevorzugt 1 bis 4 »m und besonders bevorzugt 2 bis 3 »m eingesetzt. Geeignet sind beispielsweise auch die im Handel erhältlichen Produkte, wie z. B. Syloid® 244 der Firma Grace GmbH, Wesel.
Die Überzugsmassen können ggf. auch noch mindestens einen Haftvermittler, bevorzugt in einer Menge von 0 bis 3 Gew.-%, besonders bevorzugt 1,5 bis 2,5 Gew.-%, jeweils bezogen auf das Gesamtgewicht der Überzugsmasse, enthalten. Insbesondere werden sogenannte "saure" Haftvermittler, d. h. z. B. Derivate der Phosphorsäure eingesetzt.
Geeignet ist u. a. beispielsweise das folgende im Handel erhältliche Produkt: Ebecryl® PA 170 der Firma UCB, Belgien.

Schließlich können die Überzugsmassen ggf. noch übliche Hilfs- und Zusatzstoffe, bevorzugt in einer Menge von 1 bis 7 Gew.-%, besonders bevorzugt 2 bis 4,5 Gew.-%, jeweils bezogen auf das Gesamtgewicht der Überzugsmasse, enthalten.
Beispiele für übliche Additive sind Entlüftungsmittel, Benetzungshilfsmittel, Antiabsetzmittel, Verlaufs- und Slipmittel u. ä.
Darüber hinaus können ggf. nicht mitvernetzende Lösungsmittel, wie z. B. aromatische Kohlenwasserstoffe (Xylol), Ester (Butylacetat) u. a., in geringen Mengen mitverwendet werden, wobei der Lösungsmittelanteil 3 bis 5 Gew.-% nicht übersteigen sollte, bezogen auf das Gesamtgewicht der Überzugsmasse. Bevorzugt werden jedoch lösemittelfreie Überzugsmassen eingesetzt.
Aufgrund der Härtung mittels ionisierender Strahlung ist der Zusatz von Photoinitiatoren nicht erforderlich, wodurch Geruchsbelästigungen u. ä. vermieden werden. Darüber hinaus ist es auch möglich, pigmentierte (auch deckend pigmentierte) Überzugsmassen in dem Verfahren einzusetzen. Der Pigmentgehalt dieser pigmentierten Überzugsmassen liegt üblicherweise zwischen 10 und 28 Gew.-%, bevorzugt zwischen 15 und 25 Gew.-%, jeweils bezogen auf das Gesamtgewicht der Überzugsmasse.
Beispiele für geeignete Pigmente sind Titandioxid und andere üblicherweise eingesetzte Pigmente.
Besonders vorteilhaft ist es, wenn die zur Herstellung aller Lackschichten eingesetzten Überzugsmassen jeweils die gleiche Zusammensetzung aufweisen.

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### Beispiel 1

Durch inniges Vermischen wurde aus folgenden Komponenten eine Überzugsmasse 1 hergestellt:
5,0 Teile eines handelsüblichen Reinacrylatharzes, 70 %ig gelöst in Hexandioldiacrylat (30 % Hexandioldiacrylat) (Ebecryl® 754 der Firma UCB, Drogenbos, Belgien)
20,0 Teile eines handelsüblichen Polyesteracrylates mit einer Viskosität von 4 - 7 Pas bei 23°C, einer Säurezahl von max. 5 mg KOH/g, einer Jodfarbzahl von max. 10 und einer OH-Zahl von ca. 60 mg KOH/g, gelöst 80%ig in Tripropylenglykoldiacrylat (Laromer® PE 46 der Firma BASF AG, Ludwigshafen)
10,0 Teile eines handelsüblichen aromatischen Epoxyacrylates mit einer Viskosität von 8 - 12 Pas bei 23°C, einer Säurezahl von max. 5 mg KOH/g und einer OH-Zahl von ca. 160 mg KOH/g, gelöst 80%ig in Hexandioldiacrylat (Laromer® EA 81 der Firma BASF AG, Ludwigshafen)
45,0 Teile Tripropylenglykoldiacrylat
2,0 Teile Ethanol
0,6 Teile einer handelsüblichen oberflächenaktiven Substanz (Byk® 301 der Firma Byk-Chemie GmbH, Wesel)
0,4 Teile eines handelsüblichen Antiausschwimmittels (Disperbyk® 160 der Firma Byk-Chemie GmbH, Wesel)
0,4 Teile eines handelsüblichen Verlaufsmittels (Efka® 777 der Firma Esca Chemicals B.V.)
0,1 Teile eines handelsüblichen Netzmittels (Efka® 66 der Firma Esca Chemicals B.V.)
14,5 Teile eines handelsüblichen Mattierungsmittels (Syloid® 244 der Firma Grace GmbH, Worms)
2,0 Teile eines handelsüblichen Haftvermittlers (Ebecryl® PA 170 der Firma UCB, Drogenbos, Belgien).

Diese Überzugsmasse 1 wurde mittels Walzenauftrag auf eine Holzoberfläche in einer Menge, die einer Trockenfilmschichtdicke von 15 »m entspricht, aufgebracht. Direkt im Anschluß hieran wurde diese Überzugsmasse 1 in einer zweiten Schicht (Trockenfilmschichtdicke 3 »m) aufgebracht. Beide Schichten wurden anschließend in einer Elektronenstrahlanlage (ESI-ESH-Laboranlage) mit beschleunigten Elektronen von 150 kV Spannung, 5 mA Stromstärke bei einer Bandgeschwindigkeit von 20 m/min (= 3 GW Leistung) unter Anwendung von Inertgas bestrahlt.

Man erhält einen harten, kratzfesten Lackfilm mit einer matten Oberfläche. Der Glanzgrad nach Gardner (60° Meßwinkel) beträgt ca. 20. Der Gehalt an nicht vernetzten Lackbestandteilen der resultierenden Beschichtung beträgt weniger als 3 Gew.-%, bezogen auf das Gewicht der eingesetzten Bindemittel und Monomeren.

### Beispiel 2

Die in Beispiel 1 beschriebene Überzugsmasse 1 wurde mittels Walzenauftrag zweischichtig nach dem "naß-in-naß-Verfahren" auf imprägnierte Papierfolien (thermisch gehärtete Imprägnierung auf Basis Melaminharz, Polyester und Säurekatalysator) aufgebracht und wie in Beispiel 1 beschrieben durch Elektronenstrahlung gehärtet. Die Trockenfilmschichtdicke der ersten Schicht beträgt 15 »m, die der zweiten Schicht 3 »m.

Man erhält einen harten, kratzfesten Lackfilm mit einer matten Oberfläche. Der Glanzgrad nach Gardner (60°) beträgt ca. 20. Der Gehalt der gehärteten Beschichtung an nicht vernetzten Lackbestandteilen beträgt weniger als 3 Gew.-%, bezogen auf das Gewicht der eingesetzten Bindemittel und Monomeren.

### Beispiel 3

Durch inniges Vermischen wurde aus folgenden Komponenten eine Überzugsmasse 2 hergestellt:
54,0 Teile eines handelsüblichen amingruppenhaltigen Polyetheracrylates mit einer Viskosität von ca. 0,5 Pas bei 23°C, einer Säurezahl von max. 2 mg KOH/g und einer OH-Zahl von ca. 30 mg KOH/g (Laromer® LR 8812 der Firma BASF AG, Ludwigshafen)
12,5 Teile eines handelsüblichen Polyesteracrylates mit einer Viskosität von 4 - 7 Pas bei 23°C, einer Säurezahl von max. 5 mg KOH/g und einer OH-Zahl von ca. 60 mg KOH/g, gelöst 80%ig in Tripropylenglykoldiacrylat (Laromer® PE 46 der Firma BASF AG, Ludwigshafen)
15,5 Teile Tripropylenglykoldiacrylat
2,0 Teile Ethanol
0,6 Teile einer handelsüblichen, oberflächenaktiven Substanz (Byk® 301 der Firma Byk-Chemie GmbH, Wesel)
0,4 Teile eines handelsüblichen Antiausschwimmittels (Disperbyk® 160 der Firma Byk-Chemie GmbH, Wesel)
0,4 Teile eines handelsüblichen Verlaufsmittels (Efka® 777 der Firma Esca Chemical B.V.)
0,1 Teile eines handelsüblichen Netzmittels (Efka 66® der Firma Esca Chemicals B.V.)
14,5 Teile eines handelsüblichen Mattierungsmittels (Syloid® 244 der Firma Grace GmbH, Wesel)
Diese Überzugsmasse 2 wurde analog zu Beispiel 1 zweischichtig nach dem "naß-in-naß-Verfahren" auf eine Holzoberfläche appliziert und durch Elektronenstrahlung gehärtet. Die Trockenfilmschichtdicke der ersten Schicht beträgt 13 »m, die der zweiten Schicht 4 »m.

Man erhält einen harten, kratzfesten Lackfilm mit einer matten Oberfläche. Der Glanzgrad nach Gardner (60°) beträgt ca. 20. Der Gehalt der gehärteten Beschichtung an nicht vernetzten Lackbestandteilen beträgt weniger als 3 Gew.-%, bezogen auf das Gewicht der eingesetzten Bindemittel und Monomeren.

### Beispiel 4

Die in Beispiel 3 beschriebene Überzugsmasse 2 wurde analog zu Beispiel 3 zweischichtig nach dem "naß-in-naß-Verfahren" auf imprägnierte Papierfolien (thermisch gehärtete Imprägnierung auf Basis Melaminharz, Polyester und Säurekatalysator) aufgebracht und durch Elektronenstrahlung gehärtet. Die Trockenfilmschichtdicke der ersten Schicht beträgt 13 »m, die der zweiten Schicht 4 »m.

Man erhält einen harten, kratzfesten Lackfilm mit einer matten Oberfläche. Der Glanzgrad nach Gardner (60°) beträgt ca. 20. Der Gehalt der gehärteten Beschichtung an nicht vernetzten Lackbestandteilen beträgt weniger als 3 Gew.-%, bezogen auf das Gewicht der eingesetzten Bindemittel und Monomeren.

### Beispiel 5

Durch inniges Vermischen wurde aus folgenden Komponenten eine pigmentierte Überzugsmasse 3 hergestellt:
25,0 Teile eines handelsüblichen Polyesteracrylates mit einer Viskosität von 4 - 7 Pas bei 23°C, gelöst 80%ig in Tripropylenglykoldiacrylat (Laromer® PE 46 der Firma BASF AG, Ludwigshafen)
10,0 Teile eines handelsüblichen aromatischen Epoxyacrylates mit einer Viskosität von 8 - 12 Pas bei 23°C (Laromer® EA 81 der Firma BASF AG, Ludwigshafen)
37,0 Teile Tripropylenglykoldiacrylat
20,0 Teile Titandioxid vom Rutil-Typ
14,5 Teile eines handelsüblichen Mattierungsmittels (Syloid® 244 der Firma Grace GmbH, Worms)
2,0 Teile Ethanol
0,6 Teile einer handelsüblichen oberflächenaktiven Substanz (Byk® 301 der Firma Byk-Chemie GmbH, Wesel)
0,4 Teile eines handelsüblichen Antiausschwimmittels (Disperbyk® 160 der Firma Byk-Chemie GmbH, Wesel)
0,4 Teile eines handelsüblichen Verlaufsmittels (Efka® 777 der Firma Esca Chemicals B.V.)
0,1 Teile eines handelsüblichen Netzmittels (Efka® 66 der Firma Esca Chemicals B.V.)
Die pigmentierte Überzugsmasse 3 wurde analog zu den Beispielen 1 und 2 mittels Walzenauftrag zweischichtig auf Holzoberflächen und imprägnierte Papierfolien appliziert und durch Elektronenstrahlung gehärtet. Die Trockenfilmschichtdicke der ersten Schicht beträgt 15 »m, die der zweiten Schicht 3 »m.
Man erhält einen harten, kratzfesten Lackfilm mit einer matten Oberfläche. Der Gehalt der gehärteten Beschichtung an nicht vernetzten Lackbestandteilen beträgt weniger als 3 Gew.-%, bezogen auf das Gewicht der eingesetzten Bindemittel und Monomeren.

## Patentansprüche

1. Verfahren zur Herstellung matter Oberflächen, bei dem zunächst eine erste Lackschicht mit einer ersten Schichtdicke aufgebracht wird und anschließend auf die erste Lackschicht mindestens eine zweite Lackschicht aufgebracht wird, wobei zumindest die zuletzt aufgebrachte Lackschicht mit Mattierungsmitteln versehen ist und eine Trockenfilmschichtdicke aufweist, die kleiner als die durchschnittliche Teilchengröße des Mattierungsmittels ist, dadurch gekennzeichnet, daß die aufgebrachten Lackschichten durch ionisierende Strahlung gehärtet werden und daß Überzugsmassen aufgebracht werden, die
A) 20 bis 80 Gew.-% mindestens eines ethylenisch ungesättigten polymeren Harzes,
B) 10 bis 60 Gew.-% mindestens einer ethylenisch ungesättigten monomeren und/oder oligomeren Verbindung,
C) ggf. 5 bis 30 Gew.-% mindestens eines Mattierungsmittels,
D) ggf. einen oder mehrere Haftvermittler und
E) ggf. Hilfs- und Zusatzstoffe
enthalten, wobei die Summe der Gewichtsanteile der Komponenten (A) bis (E) jeweils 100 Gew.-% beträgt.

2. Verfahren nach Anspruch 1, dadurch gekennzeichnet, daß die Trockenfilmschichtdicke der letzten Lackschicht gleich oder kleiner ist als die Trockenfilmschichtdicke der anderen Lackschichten.

3. Verfahren nach Anspruch 1 oder 2, dadurch gekennzeichnet, daß die Summe der Trockenfilmschichtdicken aller aufgebrachten Lackschichten zwischen 5 und 20 »m liegt und/oder die Trockenfilmschichtdicke der ersten Lackschicht bzw. Lackschichten größer gleich 3 »m und/oder die Trockenfilmschichtdicke der zweiten bzw. letzten Lackschicht größer gleich 2 »m ist.

4. Verfahren nach einem der Ansprüche 1 bis 3, dadurch gekennzeichnet, daß zumindest zuletzt eine Überzugsmasse aufgebracht wird, die mindestens ein Mattierungsmittel mit einer durchschnittlichen Teilchengröße ≧ 1 »m, bevorzugt 1 bis 4 »m, enthält.

5. Verfahren nach einem der Ansprüche 1 bis 4, dadurch gekennzeichnet, daß für die Herstellung der einzelnen Lackschichten identische Überzugsmassen verwendet werden.

6. Verfahren nach einem der Ansprüche 1 bis 5, dadurch gekennzeichnet, daß die erste und zweite Lackschicht miteinander vernetzt werden.

7. Verfahren nach einem der Ansprüche 1 bis 6, dadurch gekennzeichnet, daß Überzugsmassen aufgebracht werden, die als ethylenisch ungesättigtes polymeres Harz (A) eine Mischung aus
a₁) O bis 60 Gew.-%, bezogen auf das Gesamtgewicht der Überzugsmasse, mindestens eines Polyetheracrylates
a₂) 0 bis 12 Gew.-%, bezogen auf das Gesamtgewicht der Überzugsmasse, mindestens eines Acrylatcopolymerisats, bevorzugt mit ethylenisch ungesättigten Seitenketten,
a₃) 0 bis 35 Gew.-%, bezogen auf das Gesamtgewicht der Überzugsmasse, mindestens eines Polyesteracrylates und
a₄) 0 bis 15 Gew.-%, bezogen auf das Gesamtgewicht der Überzugsmasse, mindestens eines Epoxiacrylates
enthalten.

8. Verfahren nach einem der Ansprüche 1 bis 6, dadurch gekennzeichnet, daß Überzugsmassen aufgebracht werden, die als ethylenisch ungesättigtes polymeres Harz (A) eine Mischung enthalten, die
a₁) 30 bis 55 Gew.-%, bezogen auf das Gesamtgewicht der Überzugsmasse, mindestens eines Polyetheracrylates und/oder
a₂) 3 bis 7 Gew.-%, bezogen auf das Gesamtgewicht der Überzugsmasse, mindestens eines Acrylatcopolymerisates mit ethylenisch ungesättigten Seitenketten und/oder
a₃) 15 bis 23 Gew.-%, bezogen auf das Gesamtgewicht der Überzugsmasse, mindestens eines Polyesteracrylates und/oder
a₄) 7 bis 15 Gew.-%, bezogen auf das Gesamtgewicht der Überzugsmasse, mindestens eines Epoxyacrylates
enthält.

9. Verfahren nach einem der Ansprüche 1 bis 8, dadurch gekennzeichnet, daß Überzugsmassen aufgebracht werden, die 0 bis 3,0 Gew.-% des Haftvermittlers (D) enthalten.

10. Verfahren nach einem der Ansprüche 1 bis 9, dadurch gekennzeichnet, daß Überzugsmassen aufgebracht werden, die als Komponente B Tripropylenglykoldiacrylat und/oder alkyliertes Tripropylenglykoldiacrylat enthalten.

11. Verfahren nach einem der Ansprüche 1 bis 10, dadurch gekennzeichnet, daß die Überzugsmassen auf Holz, Holzwerkstoffe oder Papier aufgebracht werden.

12. Mit einem mehrschichtigen Überzug mit matter Lackoberfläche beschichteter Gegenstand, wobei zumindest die zuletzt aufgebrachte Lackschicht mit Mattierungsmitteln versehen ist und eine Trockenfilmschichtdicke aufweist, die kleiner als die durchschnittliche Teilchengröße des Mattierungsmittels ist, dadurch gekennzeichnet, daß die aufgebrachten Lackschichten durch ionisierende Strahlung gehärtet worden sind und daß Überzugsmassen aufgebracht worden sind, die
A) 20 bis 80 Gew.-% mindestens eines ethylenisch ungesättigten polymeren Harzes,
B) 10 bis 60 Gew.-% mindestens einer ethylenisch ungesättigten monomeren und/oder oligomeren Verbindung,
C) ggf. 5 bis 30 Gew.-% mindestens eines Mattierungsmittels,
D) ggf. einen oder mehrere Haftvermittler und
E) ggf. Hilfs- und Zusatzstoffe
enthalten, wobei die Summe der Gewichtsanteile der Komponenten (A) bis (E) jeweils 100 Gew.-% beträgt.

## Claims

1. Method of producing dull surfaces, in which initially a first paint layer is applied in a first layer thickness and at least one second paint layer is then applied on top of the first paint layer, at least the paint layer applied last being provided with dulling agents and having a dry film layer thickness which is less than the average particle size of the dulling agent, characterized in that the paint layers applied are cured by ionizing radiation and in that coating compositions are applied which contain
A) 20 to 80% by weight of at least one ethylenically unsaturated polymeric resin,
B) 10 to 60% by weight of at least one ethylenically unsaturated monomeric and/or oligomeric compound,
C) if appropriate, 5 to 30% by weight of at least one dulling agent,
D) if appropriate, one or more adhesion promoters and
E) if appropriate, auxiliaries and additives,
the total of the contents by weight of each of the components (A) to (E) being 100% by weight.

2. Method according to Claim 1, characterized in that the dry film layer thickness of the last paint layer is equal to or less than the dry film layer thickness of the other paint layers.

3. Method according to Claim 1 or 2, characterized in that the total of the dry film layer thicknesses of all the paint layers applied is between 5 and 20 »m and/or the dry film layer thickness of the first paint layer or paint layers is equal to or greater than 3 »m and/or the dry film layer thickness of the second or last paint layer is greater than or equal to 2 »m.

4. Method according to one of Claims 1 to 3, characterized in that, at least at the end, a coating composition is applied which contains at least one dulling agent having an average particle size of ≧ 1 »m, preferably 1 to 4 »m.

5. Method according to one of Claims 1 to 4, characterized in that identical coating compositions are used for producing the individual paint layers.

6. Method according to one of Claims 1 to 5, characterized in that the first and second paint layers are crosslinked with one another.

7. Method according to each of Claims 1 to 6, characterized in that coating compositions are applied which, as the ethylenically unsaturated polymeric resin (A), contain a mixture of
a₁) 0 to 60% by weight, relative to the total weight of the coating composition, of at least one polyetheracrylate,
a₂) 0 to 12% by weight, relative to the total weight of the coating composition, of at least one acrylate copolymer, preferably having ethylenically unsaturated side chains,
a₃) 0 to 35% by weight, relative to the total weight of the coating composition, of at least one polyesteracrylate and
a₄) 0 to 15% by weight, relative to the total weight of the coating composition, of at least one epoxyacrylate.

8. Method according to any of Claims 1 to 6, characterized in that coating compositions are applied which, as the ethylenically unsaturated polymeric resin (A), contain a mixture which contains
a₁) 30 to 55% by weight, relative to the total weight of the coating composition, of at least one polyetheracrylate and/or
a₂) 3 to 7% by weight, relative to the total weight of the coating composition, of at least one acrylate copolymer having ethylenically unsaturated side chains and/or
a₃) 15 to 23% by weight, relative to the total weight of the coating composition, of at least one polyesteracrylate and/or
a₄) 7 to 15% by weight, relative to the total weight of the coating composition, of at least one epoxyacrylate.

9. Method according to one of Claims 1 to 8, characterized in that coating compositions are applied which contain 0 to 3.0% by weight of the adhesion promoter (G).

10. Method according to one of Claims 1 to 9, characterized in that coating compositions are applied which, as the component B, contain tripropylene glycol diacrylate and/or alkylated tripropylene glycol diacrylate.

11. Method according to one of Claims 1 to 10, characterized in that the coating compositions are applied to wood, wood materials or paper.

12. Article coated with a multilayer coating having a dull surface, at least the paint layer applied last being provided with dulling agents and having a dry film layer thickness which is less than the average particle size of the dulling agent, characterized in that the paint layers applied have been cured by ionizing radiation and in that coating compositions have been applied which contain
A) 20 to 80% by weight of at least one ethylenically unsaturated polymeric resin,
B) 10 to 60% by weight of at least one ethylenically unsaturated monomeric and/or oligomeric compound,
C) if appropriate, 5 to 30% by weight of at least one dulling agent,
D) if appropriate, one or more adhesion promoters and
E) if appropriate, auxiliaries and additives,
the total of the contents by weight of each of the components (A) to (E) being 100% by weight.

## Revendications

1. Procédé d'obtention de surfaces vernies mates, lors duquel on procède tout d'abord à l'application d'une première couche de vernis ayant une première épaisseur de couche et lors duquel on procède ensuite à l'application sur la première couche au moins d'une deuxième couche de vernis, la couche de vernis appliquée en dernier lieu au moins étant pourvue d'agents de matage et présentant une épaisseur de couche de film sec, qui est inférieure à la grandeur de particule moyenne de l'agent de matage, caractérisé en ce que l'on procède au durcissement des couches de vernis appliquées par un rayonnement ionisant et que l'on procède à l'application de masses de revêtement, qui contiennent
A) de 20 à 80 % en poids au moins d'une résine polymère éthyléniquement insaturée,
B) de 10 à 60 % en poids au moins d'un composé monomère et/ou oligomère éthyléniquement insaturé,
C) le cas échéant, de 5 à 30 % en poids au moins d'un agent de matage,
D) le cas échéant, un ou plusieurs agents adhésifs et
E) le cas échéant, des additifs et des adjuvants,
la somme des proportions en poids des composants (A) à (E) étant à chaque fois de 100 % en poids.

2. Procédé selon la revendication 1, caractérisé en ce que l'épaisseur de couche de film sec de la dernière couche est égale ou inférieure à l'épaisseur de couche de film sec des autres couches de vernis.

3. Procédé selon la revendication 1 ou 2, caractérisé en ce que la somme des épaisseurs de couche de film sec de toutes les couches de vernis appliquées se situe entre 5 et 20 microns et/ou l'épaisseur de couche de film sec de la première couche de vernis, respectivement des premières couches de vernis, est supérieure ou égale à 3 microns et/ou l'épaisseur de couche de film sec de la deuxième couche de vernis, respectivement de la dernière couche de vernis, est supérieure ou égale à 2 microns.

4. Procédé selon l'une quelconque des revendications 1 à 3, caractérisé en ce que l'on procède à l'application au moins en dernier lieu d'une masse de revêtement, qui contient au moins un agent de matage ayant une grandeur de particule moyenne ≧ 1 micron, de préférence de 1 à 4 microns.

5. Procédé selon l'une quelconque des revendications 1 à 4, caractérisé en ce que l'on utilise pour l'obtention des couches de vernis individuelles des masses de revêtement identiques.

6. Procédé selon l'une quelconque des revendications 1 à 5, caractérisé en ce que l'on réticule l'une à l'autre la première couche de vernis et la deuxième couche de vernis.

7. Procédé selon l'une quelconque des revendications 1 à 6, caractérisé en ce que l'on procède à l'application de couches de revêtement, qui contiennent en tant que résine polymère éthyléniquement insaturée (A) un mélange
a₁) de 0 à 60 % en poids, par rapport au poids total de la masse de revêtement, d'au moins un acrylate de polyéther,
a₂) de 0 à 12 % en poids, par rapport au poids total de la masse de revêtement, d'au moins un copolymérisat d'acrylate, ayant de préférence des chaînes latérales éthyléniquement insaturées,
a₃) de 0 à 35 % en poids, par rapport au poids total de la masse de revêtement, d'au moins un acrylate de polyester et
a₄) de 0 à 15 % en poids, par rapport au poids total de la masse de revêtement, d'au moins un acrylate d'époxyde.

8. Procédé selon l'une quelconque des revendications 1 à 6, caractérisé en ce que l'on procède à l'application de couches de revêtement, qui contiennent en tant que résine polymère éthyléniquement insaturée (A) un mélange
a₁) de 30 à 55 % en poids, par rapport au poids total de la masse de revêtement, d'au moins un acrylate de polyéther, et/ou
a₂) de 3 à 7 % en poids, par rapport au poids total de la masse de revêtement, d'au moins un copolymérisat d'acrylate, ayant des chaînes latérales éthyléniquement insaturées, et/ou
a₃) de 15 à 23 % en poids, par rapport au poids total de la masse de revêtement, d'au moins un acrylate de polyester, et/ou
a₄) de 7 à 15 % en poids, par rapport au poids total de la masse de revêtement, d'au moins un acrylate d'époxyde.

9. Procédé selon l'une quelconque des revendications 1 à 8, caractérisé en ce que l'on procède à l'application de masses de revêtement qui contiennent de 0 à 3,0 % en poids d'agent adhésif (D).

10. Procédé selon l'une quelconque des revendications 1 à 9, caractérisé en ce que l'on procède à l'application de masses de revêtement qui contiennent en tant que composant B du diacrylate de tripropylèneglycol et/ou du diacrylate alkylé de tripropylèneglycol.

11. Procédé selon l'une quelconque des revendications 1 à 10, caractérisé en ce que l'on procède à l'application des masses de revêtement sur du bois, sur des matériaux dérivés du bois ou sur du papier.

12. Objet revêtu d'un revêtement multicouche ayant une surface de vernis matte, la couche de vernis appliquée en dernier lieu au moins étant pourvue d'agents de matage et présentant une épaisseur de couche de film sec, qui est inférieure à la grandeur de particule moyenne de l'agent de matage, caractérisé en ce que l'on procède au durcissement des couches de vernis appliquées par un rayonnement ionisant et en ce que l'on procède à l'application de masses de revêtement qui contiennent
A) de 20 à 80 % en poids au moins d'une résine polymère éthyléniquement insaturée,
B) de 10 à 60 % en poids au moins d'un composé monomère et/ou oligomère éthyléniquement insaturé,
C) le cas échéant, de 5 à 30 % en poids au moins d'un agent de matage,
D) le cas échéant, un ou plusieurs agents adhésifs et
E) le cas échéant, des additifs et des adjuvants,
la somme des proportions en poids des composants (A) à (E) étant à chaque fois de 100 % en poids.
